# EUROPEAN PATENT APPLICATION

(11) **EP 4 660 826 A1**
(43) Date of publication of application: **10.12.2025**
(21) Application number: 24179493.2
(22) Date of filing: 03.06.2024
(51) Int. Cl.: G06F 16/245, G06F 16/903, G06F 16/906, G06N 3/00

(54) **NEURAL NETWORK PROCESSING SYSTEM AND METHOD**

(71) Applicant: NXP B.V., 5656 AG Eindhoven (NL)
(72) Inventor: Fuks, Adam, 5656AG Eindhoven (NL); Bamberg, Lennart Janis, 5656AG Eindhoven (NL)
(74) Representative: Miles, John Richard

(57) **Abstract**

A neural network processing system and a method of generating weights for a neural network processing system is described. The system includes a plurality of processor cores coupled to respective weight memories which store neural network weights. The neural network weights are stored as a plurality of weight mask bits, each weight mask bit indicating whether a corresponding weight is a pruned weight or a non-pruned weight and a plurality of non-pruned weights. At least one of the non-pruned weights has a pruned weight value. Non-pruned weights with a pruned weight value may be selectively added after initial pruning to equalize memory section size, word align memory sections or to ensure processing stalls (hiccups) occur in the same cycle. The resulting pruned weight sets may be used with neural processor accelerators operating in lock step.

## Description

### FIELD

The present disclosure relates to neural network processing system and a method of generating weights for a neural network processing system.

### BACKGROUND

Neural Networks often have a large number of near zero magnitude parameters. It is possible to force those to exact zero and with some tuning of the Neural Network recover the accuracy lost in forcing some parameters to zero. This action of forcing Neural Network parameters, herein referred to as weights or neural network weights to zero is known as Pruning. Pruning using the method above results in what is known as Unstructured Sparsity. Unstructured sparsity can result in high pruning rate (and thus high compressibility).

### SUMMARY

Aspects of the disclosure are defined in the accompanying claims. In a first aspect, there is provided a system for neural network processing and comprising: a plurality of processor cores, each processor core coupled to a corresponding one of a plurality of weight memories configured to store a plurality of sets of neural network weights; wherein, each set of the plurality of neural network weights comprises: a plurality of weight mask bits, each weight mask bit indicating whether a corresponding weight is a pruned weight or a non-pruned weight; a plurality of non-pruned weights; and wherein at least one of the non-pruned weights has a pruned weight value.

In some embodiments, the pruned weight value is zero. In some embodiments, each set of the plurality of neural network weights further comprises a plurality of blocks, each block comprising : a header comprising M weight mask bits; a plurality of payloads, a payload of M-bytes or less, wherein the payload comprises non-pruned weights. In some embodiments, the plurality of blocks are is arranged to be processed sequentially by the respective processor core.

In some embodiments, each processor core comprises a weight depruner having an input coupled to a respective weight memory and an output coupled to a processor. In some embodiments, the weight depruner is configured to: receive a header from the respective weight memory; receive a payload corresponding to the at least one header from the respective weight memory; output a M-byte de-pruned weight; wherein the weight depruner is further configured to: (i) output a combination of K-bytes comprising at least one of a payload value and a zero byte value determined from a subset of K mask bits in the header; and (ii) repeat step (i) for the next subset of K mask bits in the header. In some embodiments, a first weight memory of the plurality of memories comprises a weight memory section configured to be processed concurrently with a weight memory section in at least one further weight memory of the plurality of memories.

In some embodiments, each of the weight memory sections correspond to a row of weights in a weight matrix. In some embodiments, the weight memory sections are the same size. In some embodiments, the weight memory sections are word aligned. In some embodiments, a location of a non-pruned weights having the pruned weight value in the weight memory section in the first weight memory corresponds to a location within the weight memory section of the at least one further weight memory having the highest unpruned weight density. In some embodiments, the system comprises a data memory coupled to the plurality of processor cores.

In a second aspect, there is provided a method of generating a plurality of pruned weights for a neural network, the method comprising: providing a plurality of neural network weights; determining a plurality of sections of the plurality of neural network weights, each section of the plurality of sections configured to be processed concurrently with at least one further section of the plurality of sections by a respective processor of a multi-processor system; generating a plurality of pruned weights from the plurality of neural network weights, the plurality of pruned weights comprising: a plurality of weight mask bits, each weight mask bit indicating whether a corresponding weight is a pruned weight or a non-pruned weight; and a plurality of non-pruned weights; and selectively modifying at least one section of the plurality of sections by replacing a pruned weight with a non-pruned weight by modifying a weight mask bit to indicate a non-pruned weight instead of a pruned weight and adding a corresponding non-pruned weight replacing a pruned weight with a non-pruned weight having a pruned weight value. In some embodiments, the pruned weight value is zero.

In some embodiments, each of the plurality of neural network weights further comprise: a plurality of blocks, each block comprising a plurality of headers, each header comprising M weight mask bits; a plurality of payloads, each payload comprising a payload of M-bytes or less, wherein the payload comprises non-pruned weights.

In some embodiments, the at least one section comprises a least compressed section having a least compressed weight set of the plurality of sections and wherein selectively modifying the at least one section further comprises the steps of (i) determining the pruned weight is in a weight location in the least compressed section having the greatest number of pruned weights in N locations before and N-1 locations after the pruned weight location;(ii) replacing the pruned weight with the non-pruned weight having the pruned weight value; (iii) re-determining the weight location; (iv) repeating steps (i) to (iii) until the weight section is word-aligned; (v) equalizing the weight count of the plurality of sections.

In some embodiments, selectively modifying the at least one section further comprises the steps of: (i) determining that a first section of the plurality of sections causes a processor stall; (ii) determining a location within the first section having greatest number of unpruned weights in N locations before and N-1 locations after the unpruned weight location; (iii) determining whether a pruned weights is located in a corresponding location in at least one other section configured to be processed concurrently with the first section; (iv) replacing the pruned weight with the non-pruned weight having the pruned weight value;

In some embodiments, selectively modifying the at least one section comprises replacing a plurality of pruned weights with a plurality of non-pruned weights, each of the plurality of non-pruned weights having a pruned weight value in order to equalize the size of the at least one section and at least one further section of the plurality of sections.

In some embodiments, selectively modifying the at least one section comprises replacing a plurality of pruned weights with a plurality of non-pruned weights having a pruned weight value to word align the first section when stored in a memory.

In a third aspect, there is provided a method of de-pruning a plurality of pruned weights for a neural network in a system for neural network processing comprising: a plurality of processor cores, each processor core coupled to a corresponding one of a plurality of weight memories configured to store a plurality of neural network weights; wherein, the plurality of neural network weights comprise: a plurality of weight mask bits, each weight mask bit indicating whether a corresponding weight is a pruned weight or a non-pruned weight; a plurality of non-pruned weights; and wherein at least one of the non-pruned weights has a pruned weight value, the method comprising the steps of: receiving a header comprising M mask bits from the respective weight memory; receiving a payload of M-bytes or less non-pruned weight values from the respective weight memory, the payload corresponding to the header; and outputting a M-byte de-pruned weight by: (i) outputting a combination of K-bytes, each byte comprising a payload-value or a zero-value determined from a subset of K mask bits in the header; and (ii) repeating step (i) for each subset of K mask bits in the header.

### BRIEF DESCRIPTION OF THE DRAWINGS

In the figures and description like reference numerals refer to like features. Embodiments are now described in detail, by way of example only, illustrated by the accompanying drawings in which:
Figure 1A shows a system for neural network processing according to an embodiment.
Figure 1B shows an example structure for storing a pruned weight set.
Figure 1C illustrates a detail of the weight memory system of figure 1A.
Figure 2 shows a neural network weight de-pruner according to an embodiment.
Figure 3 illustrates an example operation of the neural network weight de-pruner for an 8-bit weight mask and a payload of up to 8 bytes.
Figure 4 illustrates a method of neural network weight de-pruning for an M-bit weight mask and a payload of up to M bytes.
Figure 5 shows a method of generating a pruned neural network weight set according to an embodiment.
Figure 6 illustrates a method of generating a neural network weight set according to an embodiment.
Figure 7A shows an example scorecard used for generating a pruned weight set according to an embodiment.
Figure 7B shows an example pruned weight replacement in a pruned weight set.
Figure 8 shows a method of generating a scorecard to select a pruned weight for replacement according to an embodiment.
Figure 9 shows a method of generating a replacement scorecard to select a pruned weight for replacement from the scorecard generated by the method of figure 8 according to an embodiment.
Figure 10 illustrates a method of generating a neural network weight set according to an embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DETAILED DESCRIPTION OF EMBODIMENTS

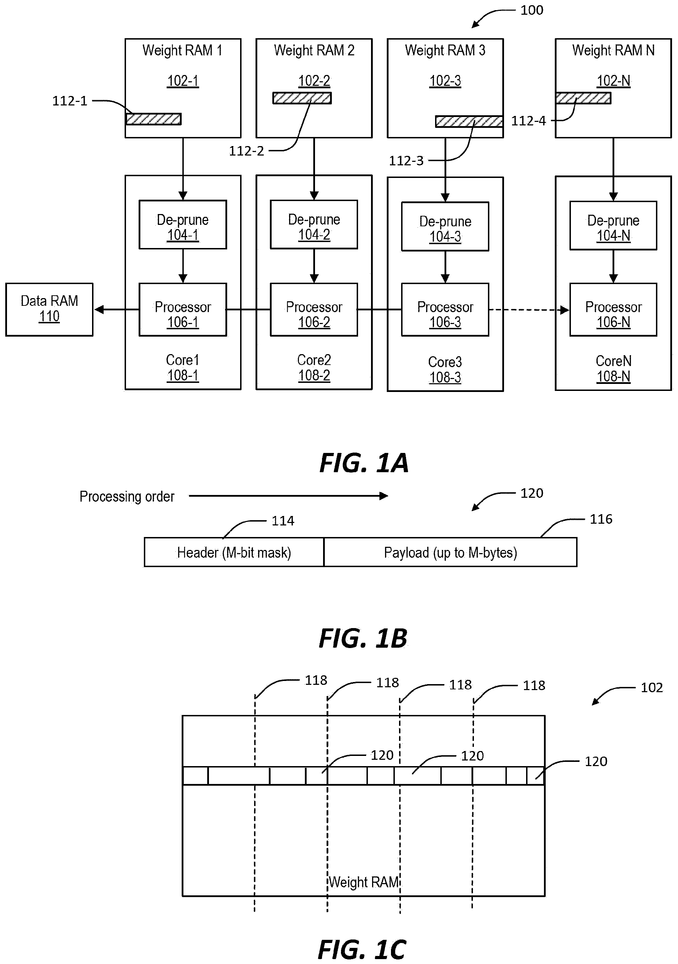

Figure 1A shows a system for neural network processing 100 according to an embodiment. The neural network processing system 100 includes a number N of processing cores 108-1, 108-2, 108-3 to 108-N. Each processing core 108-1, 108-2, 108-3 to 108-N includes a de-pruner 104-1, 104-2, 104-3, 104-N and a processor 106-1, 106-2, 106-3, 106-N. The de-pruner 104-1, 104-2, 104-3, 104-N has de-pruner input connected to a respective weight memory 102-1, 102-2, 102-3, 102-N and a de-pruner output connected to a respective processor 106-1, 106-2, 106-3, 106-N. A data memory 110 is connected to each of the processors 106-1, 106-2, 106-3, 106-N.

The system 100 may accelerate the processing of neural networks using multiple processing cores 108-1, 108-2, 108-3 to 108-N. The processing cores 108-1, 108-2, 108-3 to 108-N may operate on shared data but different sections 112-1, 112-2, 112-3, 112-4 of weights which may correspond to different rows of a given weight matrix. Alternatively, the processing cores 108-1, 108-2, 108-3 to 108-N may use shared weights, but different data. In all cases, the system 100 is configured such that the processing cores 108-1, 108-2, 108-3 to 108-N run in lockstep, for example the processing throughput time for give section of weights 112-1, 112-2, 112-3, 112-4 is the same for each processing core 108-1, 108-2, 108-3 to 108-N.

In the case where shared data is used and computed by different weight matrix rows in different compute blocks, there exists a challenge in ensuring alignment in compute time, such that data can be shared in lockstep.

The irregularity of the occurrence of the zero-valued weights makes it harder to use hardware acceleration running on a very large number of parallel processing cores 108 with high re-use of data/weights.

Figure 1B show an example weight structure 120 for storing a pruned weight set, the weight structure 120 may be referred to as a block. A block includes a header 114 includes an M-bit mask. The bits in the mask can be logic 1 for a pruned weight and logic 0 for an un-pruned (non-pruned) weight or vice versa. The header 114 has a corresponding payload 116 includes up to M-bytes each byte representing an un-pruned (non-zero) weight. During processing a sequence of blocks are processed in the order <header> <payload> < header> <payload>. The arrangement of the pruned weights in memory is determined by the parameter M which may correspond to the width of the data bus between the weight memory. The parameter M also determines the memory Word size. For example, for 8bytes (64bit bus width), the structure is organized as <8bits mask> , <up to 8bytes of non-pruned data> , <8bits mask>, <up to 8bytes of non-pruned data> ,<8bits mask>,<up to 8bytes of non-pruned data>.

Because of the pruning, the size of each payload 116 varies and so when organized in memory, the weight structures 120 may not align with the word boundaries 118 in weight memory 102 as illustrated in figure 1C.

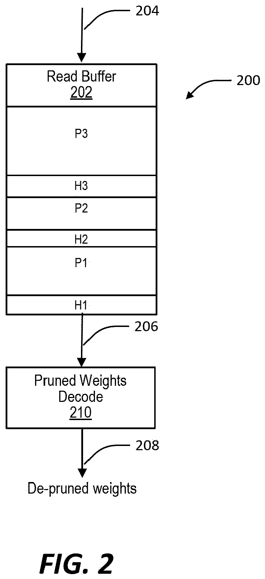

Figure 2 shows a de-pruner 200 which may be used to implement the de-pruner 104. A read buffer 202 has a read buffer input 204 which may be connected to a weight memory, for example weight RAM 102. A read buffer output 206 is connected to a pruned weights decoder 210 having a decoder output 208 that may be connected to a processor, for example processor 106. In operation, the read buffer 202 reads a sequence of weights which may also be referred to herein as a weight stream from a weight memory (not shown). As illustrated, the read buffer has three weight sets each with respective header (H1, H2, H3) and payload (P1, P2, P3). The data from the read buffer is received by the pruned weight decoder 210 in the order H1, P1, H2, P2, H3, P3. The pruned weight decoder 210 may iteratively decode (de-prune) the weights in the weight stream by separating the mask bits in the respective header and then iteratively decoding the corresponding payload by inserting zeros (pruned values) or payload weights into the output stream dependent on the mask bit values. The resulting de-prune weights may be output on the de-pruned weight output 208 for processing by a respective processor 106.

Table 1 below illustrates an example of iterative decoding using two mask bits at a time of the corresponding payload in Verilog notation. The parameter "data" is the weight stream being decoded.

**Table 1**

| Mask Bit Values ("0" = not pruned, "1" = pruned) | Payload data |
|---|---|
| 00 | {data[M-1:0]} |
| 01 | {data[M-2:0],8'b0} |
| 10 | {data[M-2:1],8'b0, data[0]} |
| 11 | {data[M-3:0],8'b0,8'b0} |

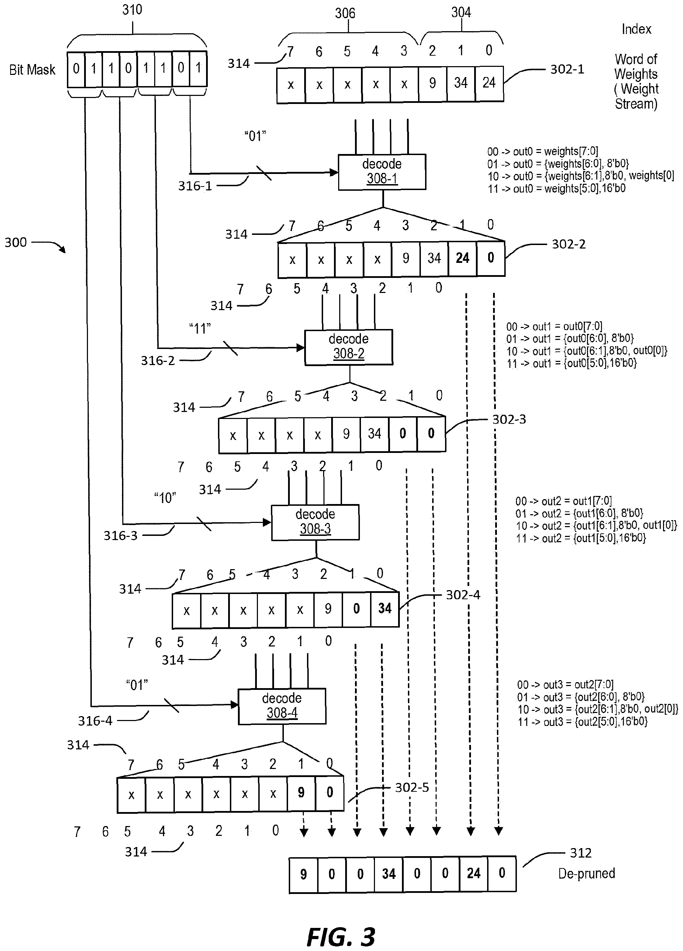

Figure 3 shows an illustrates an example operation 300 of the neural network weight de-pruner for M=8 i.e., an 8-bit bit mask value "01101101" with "0" indicating an unpruned weight and a payload of three bytes 24,34,9. It will be appreciated that the payload can be up to 8 bytes corresponding to a value M=8 if all weights are un-pruned. The header 310 is separated from the incoming weight stream 302-1, 302-2, 302-3, 302-4, 302-5 and used to decode the subsequent payload bytes 304. The remainder 306 of the eight bytes illustrated in weight stream 302-1 are denoted as 'x' as they are not relevant to the current bit mask 310 but may contain subsequent headers and payload in the incoming weight stream. After each pair of bit masks has been used for decoding, the decoded two weight bytes are provided to the output register 312 and the "0" index value for the next pair of mask bits corresponds to the position of the next non-decoded payload byte in the incoming weight stream.

The first decode step 308-1 decodes the pruned weights based on the pair of mask bits 316-1 according to the mapping of table 1, resulting in the first pair of decoded outputs "0", "24". After the first decode step 308-1, the "0" index value of the index values 314 corresponds to the next un-decoded payload byte "34". The second decode step 308-2 decodes the pruned weights based on the pair of mask bits 316-2 resulting in the second pair of decoded outputs "0", "0". After the second decode step 308-2, the "0" index value corresponds to the next un-decoded payload byte, which remains at "34". The third decode step 308-3 decodes the pruned weights based on the pair of mask bits 316-3 resulting in the third pair of decoded outputs "34", "0". After the third decode step 308-3, the "0" index value corresponds to the next (in this case final) un-decoded payload byte, which is "9". The fourth decode step 308-4 decodes the pruned weights based on the pair of mask bits 316-4 resulting in the fourth pair of decoded outputs "0", "9". The decoding of the pruned weights for the current header, payload pair is completed and the decoder can then continue with the next header, payload pair.

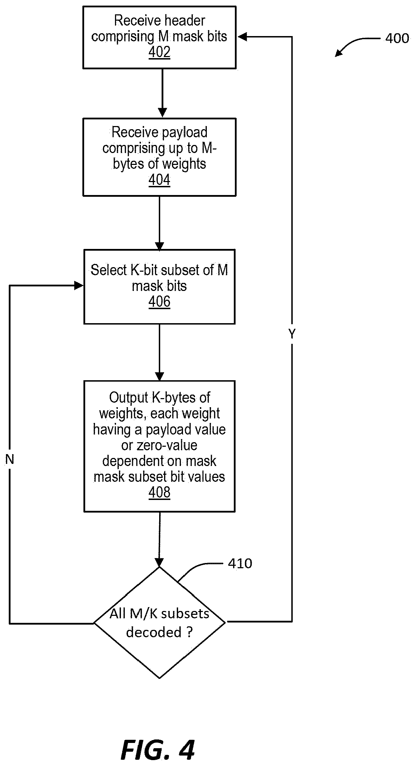

The above example iterative decode may be implemented in general for K subsets of mask bits as illustrated in figure 4 which shows a method of weight de-pruning 400. In step 402, a header is received including M mask bits. In step 404, a payload corresponding to the header is received comprising up to M bytes of weights depending on the degree of pruning. In step 406 a subset K bits of the M mask bits is selected, where K is a factor of M, and used for generating unpruned weights in step 408. Each weight will have either one or more payload values or zero value depending on the mask subset bit values. Following on from step 408, in step 410 the method checks if all M/K subsets have been decoded for the current header. If they have been decoded then the method returns to step 402 and receives the next header. Otherwise the method returns to step 406 selects the next subset of the M mask bits.

Returning to the example where M = 8, the non-zero bytes cost 9bits (8bits for weight value + 1bit mask), and pruned bytes cost 1bit (1bit for mask), of memory. Since the consumption of the weights is designed to take in a word of bytes and extract a word of weights (1 byte each), it means that decoding sparse weights, will tend to have on-average fewer bits to be fetched than to be consumed by the processor core due to the compressibility of the pruned weights.

In some cases, the irregularity of sparsity can cause some words to require more bits to encode than non-pruned weights. Even if a buffer contains a few words, a sufficient number of consecutive words which require more bits in encoding than the original word will eventually result in a 'Hiccup'. A Hiccup is defined as a cycle during which weights cannot be provided, because one more memory word needs to be read from the weight RAM.

Hiccups cause a challenge if multiple compute blocks are run in lockstep. This is because Hiccups can occur at different times for different compute blocks and so lockstep operation cannot be guaranteed.

In addition, pointer arithmetic becomes more complex if each group of weight rows of a weight matrix which is pruned has a different length (i.e., different offsets for each group). For a single continuous block of weights which can be processed in pieces by a compute block (N number of weight rows at a time, for example), then having a non-deterministic pruned section length could mean that weights end on a non-word-aligned position. Finally, in some cases, it is advantageous to be able to skip part of the weights (e.g., to skip convolution portion which is on top of padded data) and be able to jump into a position inside the operator (e.g. 1/3 of the way in).

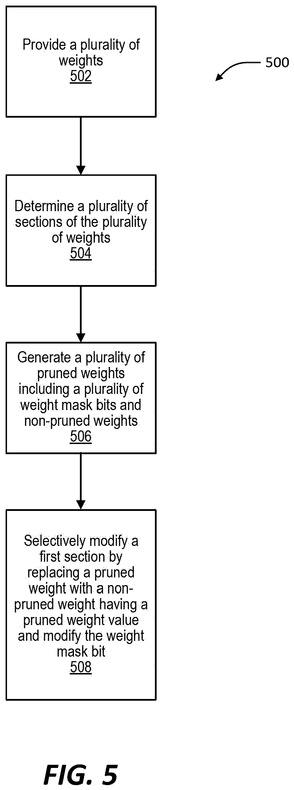

Figure 5 shows a method of generating a pruned neural network weight set 500 according to an embodiment. In step 502, a plurality of weights is provided typically as a matrix of weight values. Sections of the plurality of weights are determined in step 504. The sections consist of groups of weights intended to be processed concurrently by multiple processing cores such as for example processing cores 108-1, 108-2, 108-3, 108-N. In step 506 a plurality of pruned weights is generated which includes a plurality of weight mask bits and a corresponding plurality of non-pruned weights as indicated by the weight mask bit values. In step 508, a first section of the plurality of sections of weights may be modified by replacing a pruned weight with a non-pruned weight by modifying the relevant weight mask bit to indicate a non-pruned weight instead of a pruned weight and adding a pruned weight having a weight value which is typically zero . This increases the memory required by the section by one byte. The method 500 allows a section of a pruned weight set to be word aligned at desired points which may reduce the probability of a processing hiccup.

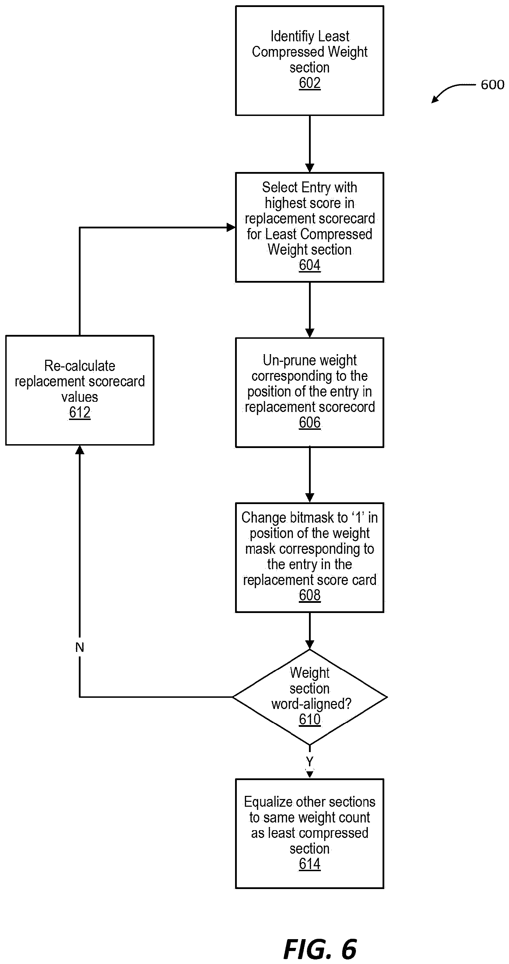

Figure 6 shows a method of generating a pruned neural network weight set 600 according to an embodiment. In step 602, The least compressed weight section of a plurality of weight sections is identified which corresponds to the weight section having the fewest number of pruned weights. Each of the plurality of weight sections is processed concurrently by a respective different core in a multi-processor system, such as for example processor system 100. The weight sections may also be referred to as weight streams. In step 604, an entry is selected with the highest score on a replacement score card for the least compressed weight section. The replacement scorecard may be generated from a count for each location in a weight mask matrix of the greatest number of pruned weights in N locations before and N-1 locations after the pruned weight location and may indicate a location or region in memory with the highest pruned weight density. In step 608 the pruned weight in the location determined in step 604 is modified by replacing the pruned weight with a non-pruned weight by modifying the corresponding weight mask bit to indicate a non-pruned weight instead of a pruned weight and adding a non-pruned weight with a pruned weight value which may be zero or some other reserved value (step 608). In step 610 the method may check if following the replacement, the resulting pruned weight section is word aligned. If it is not word aligned, then in step 612 the replacement score card values may be re-calculated, following which the method returns to step 604. Returning to step 610, if the weight section is word aligned, then in step 614 the other weight sections may be equalized to the same un-pruned weight count by for example repeating steps 604, 606, 608 for the other sections.

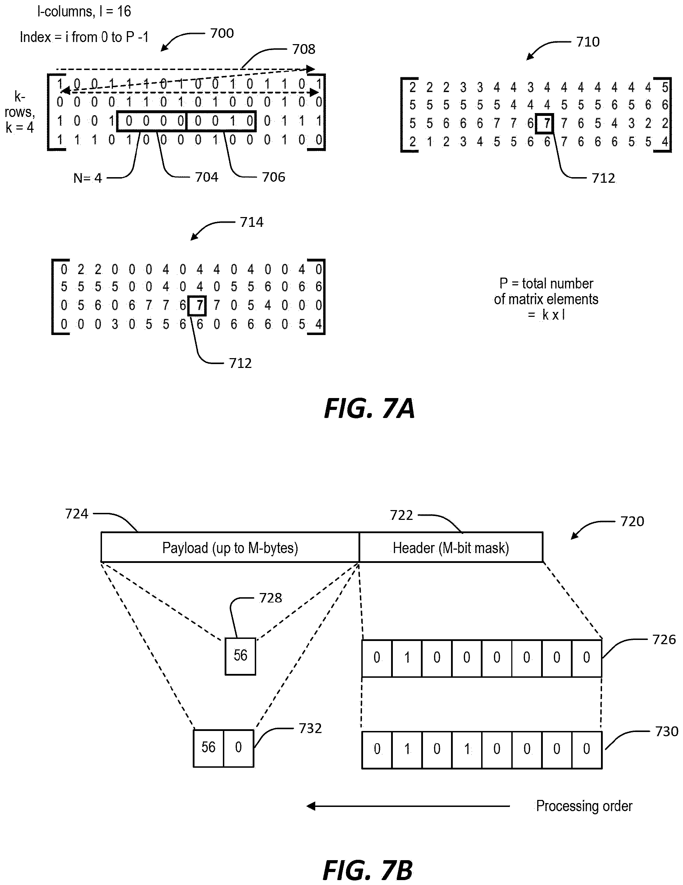

Figure 7A shows an example illustration of a weight mask matrix 700 which may be constructed from the weight mask bits of the neural network weights, a scorecard matrix 710 and a replacement scorecard matrix 714. The scorecard 710 represents a matrix equal in size to the weight mask matrix, in which each position indicates the number of pruned weights (pruned weight density) "near" to that position. Consequently, the higher the value at any position, the greater the data-compression is around that position. The replacement scorecard 714 is a logical combination which retains those high values only for positions corresponding to a pruned weight. In general, the matrices 800, 810, 814 have k rows and l columns, with a total number of elements (weights) = k x l. The index i used in the methods 800,900 described below runs from 0 to P-1 as indicated by dashed line 708. In this example, k=4, l=16 and P = 64. The number of elements used in the score core card calculation for the scorecard matrix 710 is 2N including (i) N elements before the current weight 704, and (ii) the current weight together with the following N-1 elements 706. In this example N=4, and a location 712 for initial replacement having a highest score (pruned weight density) in the replacement scorecard 714. Figure 7B illustrates an example weight structure 720 including header 722 and payload 724 before and after pruned weight replacement in location 712. The initial weight mask 726 corresponds to regions 704, 706 in the weight mask 700 and has an example single payload byte 728 of "56". The modified weight mask 730 corresponds to regions 704, 706 in the weight mask 700 and has two payload bytes 732 and an additional value of "0".

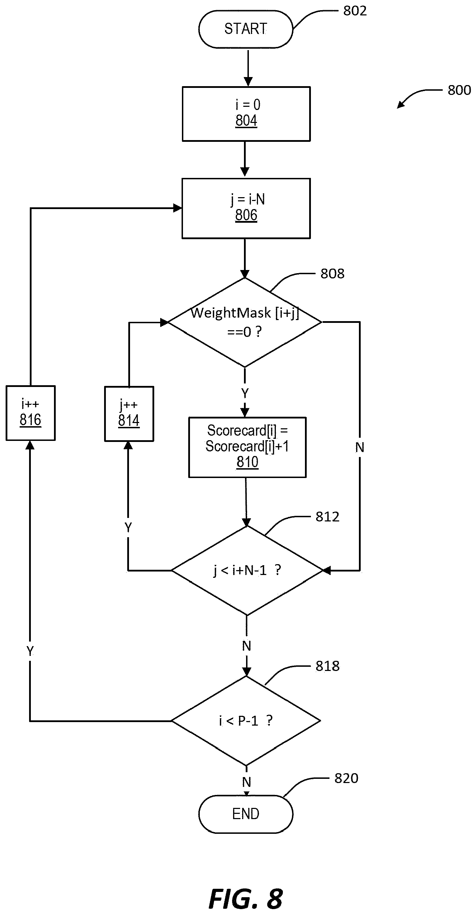

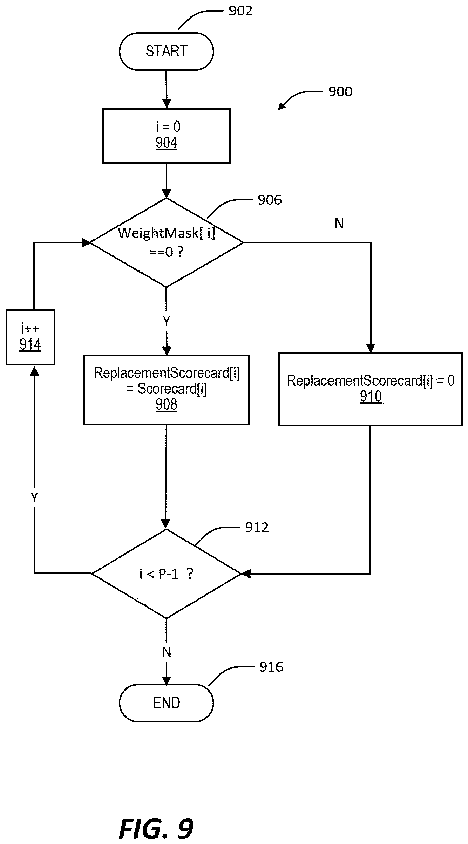

Figures 8 and 9 show an example method for generating a replacement score card. Figure 8 shows a method 800 for generating an initial score card consisting of P weights from the weight mask bits. The method starts in step 802. A current weight mask position i is set to 0 (first weight position) in step 804. In step 806, a second parameter j is set to a value i-N where N is the number of places before the current weight location which potentially contribute to the current weight position score value. In the current example, a mask value of 0 indicates a pruned weight and a mask value of 1 indicates a non-pruned weight. In other examples the mask bit values may indicate the opposite. In step 808, the weight mask in the j^{th} position is checked. If the weight mask indicates a pruned weight, then in step 810 the scorecard of the current weight is incremented and the method proceeds to step 812. Otherwise, the method proceeds directly to step 812. In step 812 if the j^{th} position is less than the N-1^{th} position after the current weight position then the value of j is incremented (step 814) and the method returns to step 808. Once the score for the current weight position is completed, in step 818 the method checks if the scorecard is complete for all weight position by comparing the current value of index i with the value of P-1. If the scorecard is complete, the method ends in step 820. Otherwise in step 816, the current weight moves to the next weight i.e., the value of i is incremented and the method then returns to step 806.

Once the score card is generated, a replacement score card 714 is generated which can be done for example by a logical AND of the inverse of the mask weight matrix 700 and a scorecard matrix 710. Figure 9 shows a method of generating a replacement score card 900 from the scorecard generated by method 800. The method starts in step 902. A current weight mask position i is set to 0 (first weight position) in step 904. In the current example, a mask value of 0 indicates a pruned weight and a mask value of 1 indicates a non-pruned weight. In step 906, the weight mask in the i^{th} position is checked. If the weight mask indicates a pruned weight, then the i^{th} position of replacement score card takes the score of the scorecard corresponding to the current weight (step 908). If the weight mask indicates a non-pruned weight, then the replacement score card i^{th} position is assigned to 0 (step 910). Following either of steps 908 or 910, in step 912 the method checks if the replacement scorecard is complete for all weight positions. If the replacement scorecard is complete, the method ends in step 916. Otherwise in step 914, the current weight moves to the next weight and the method then returns to step 906.

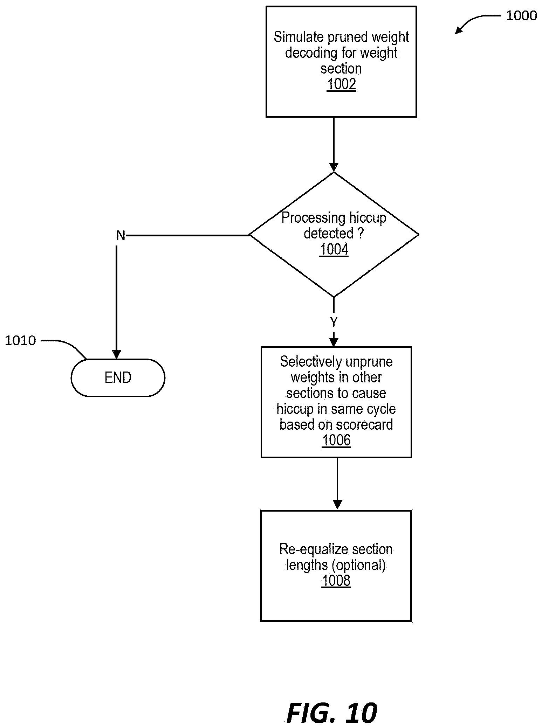

Figure 10 shows a method of generating neural network weights 1000 according to an embodiment. In step 1002 the pruned weight decoding may be simulated for a weight section. In step 1004, based on the simulation or by some other means, if the method detects that no processing hiccup will occur, the method ends (step 1010). Otherwise if a processing hiccup will occur, the method proceeds to step 1006. In step 1006 the method selectively un-prunes weights in other sections which cause a hiccup in the same cycle using a replacement scorecard which is inverse to that generated by methods 800, 900. In this case, instead of incrementing the score for pruned weights, the score is incremented for non-pruned weights and the replacement scorecard is generated by masking out the location of the pruned-weights. The resulting replacement scorecard then indicates the un-pruned weight density rather than the pruned weight density. For the section with the hiccup, the location with the highest un-pruned weight density (highest score card value) may correspond to the location within the section where the hiccup is most likely to occur. Any pruned weights in the corresponding locations in the other section may then be unpruned as previously described in methods 600, 800, 900, which may ensure that the processing hiccup occurs at the same time for all sections. This helps ensure that the neural network processing system can operate reliably in lock step. Optionally in step 1008 section lengths may be re-equalised.

Embodiments described in the present disclosure provide a method and system which may balance sections in pruned weights sets for use in a multi-processing system. Sections may balanced to achieve one or more of (i) word alignment of a start of section, (ii) word alignment of a section which could be in the middle of a set of weights for one core and (iii) alignment of size overall for sections to be consumed concurrently. In addition, one or more embodiments may align Hiccups (if there are any) to occur in all processors at same time.

Embodiments described in the present disclosure provide a method and system which may balance out sections of pruned weights to ensure word alignment at desired points as well as allowing a guarantee of section lengths. Embodiments of the present disclosure may also ensure hiccupping, if it occurs, occurs at the same position for each section. This allows pruned weights to be used in a multi-processor neural network accelerator in which the processors operate in lock step. Operating in lock step allows scalability of multi-processor execution of neural networks. Embodiments may allow pruned weights which may require less memory for storage and less memory bus bandwidth to be used for lock step multi-processor neural network accelerators. The term neural network and neural network weights used through-out may also be considered to refer to a machine learning model and machine learning model weights or inference engine and inference engine weights.

A neural network processing system and a method of generating weights for a neural network processing system is described. The system includes a plurality of processor cores coupled to respective weight memories which store neural network weights. The neural network weights are stored as a plurality of weight mask bits, each weight mask bit indicating whether a corresponding weight is a pruned weight or a non-pruned weight and a plurality of non-pruned weights. At least one of the non-pruned weights has a pruned weight value. Non-pruned weights with a pruned weight value may be selectively added after initial pruning to equalize memory section size, word align memory sections or to ensure processing stalls (hiccups) occur in the same cycle. The resulting pruned weight sets may be used with neural processor accelerators operating in lock step.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A system for neural network processing and comprising:
a plurality of processor cores, each processor core coupled to a corresponding one of a plurality of weight memories configured to store a plurality of sets of neural network weights;
wherein, each set of neural network weights comprises:
a plurality of weight mask bits, each weight mask bit indicating whether a corresponding weight is a pruned weight or a non-pruned weight;
a plurality of non-pruned weights; and
wherein at least one of the non-pruned weights has a pruned weight value.

2. The system of claim 1 wherein the pruned weight value is zero.

3. The system of any preceding claim wherein each of the plurality sets of neural network weights comprises a plurality of blocks, each block comprising:
a header comprising M weight mask bits; and
a payload comprising a payload of M-bytes or less, wherein the payload comprises non-pruned weights.

4. The system of claim 3 wherein the plurality of blocks are arranged to be processed sequentially by the respective processor core.

5. The system of any of claims 3 or 4, wherein each processor core comprises a weight depruner having an input coupled to a respective weight memory and an output coupled to a processor.

6. The system of claim 5, wherein the weight depruner is configured to:
receive a header from the respective weight memory;
receive a payload corresponding to the header from the respective weight memory;
output a M-byte de-pruned weight;
wherein the weight depruner is further configured to:
(i) output a combination of K-bytes comprising at least one of a payload value and a zero byte value determined from a subset of K mask bits in the header; and
(ii) repeat step (i) for the next subset of K mask bits in the header.

7. The system of any preceding claim wherein a first weight memory of the plurality of weight memories comprises a weight memory section configured to be processed concurrently with a weight memory section in at least one further weight memory of the plurality of weight memories.

8. The system of claim 7, wherein each of the weight memory sections correspond to a row of weights in a weight matrix.

9. The system of claim 7 or 8, wherein the weight memory sections are the same size.

10. The system of any of claims 7 to 9, wherein the weight memory sections are word aligned.

11. The system of any of claims 7 to 10 wherein a location of a non-pruned weight having the pruned weight value in the weight memory section in the first weight memory corresponds to a location within the weight memory section of the at least one further weight memory having the highest unpruned weight density.

12. The system of any preceding claim further comprising a data memory coupled to the plurality of processor cores.

13. A method of generating a plurality of pruned weights for a neural network, the method comprising:
providing a plurality of neural network weights;
determining a plurality of sections of the plurality of neural network weights,
each section of the plurality of sections configured to be processed concurrently with at least one further section of the plurality of sections by a respective processor of a multi-processor system;
generating a plurality of pruned weights from the plurality of neural network weights, the plurality of pruned weights comprising:
a plurality of weight mask bit, each weight mask bit indicating whether a corresponding weight is a pruned weight or a non-pruned weight; and
a plurality of non-pruned weights; and
selectively modifying at least one section of the plurality of sections by replacing a pruned weight with a non-pruned weight by modifying a weight mask bit to indicate a non-pruned weight instead of a pruned weight and adding a corresponding non-pruned weight having a pruned weight value.

14. The method of claim 13, wherein the at least one section comprises a least compressed section having a least compressed weight set of the plurality of sections and wherein selectively modifying the at least one section further comprises the steps of:
(i) determining the pruned weight is in a weight location in the least compressed section having the greatest number of pruned weights in N locations before and N-1 locations after the weight location;
(ii) replacing the pruned weight with the non-pruned weight having the pruned weight value;
(iii) re-determining the weight location;
(iv) repeating steps (i) to (iii) until the section is word-aligned; and
(v) equalizing a weight count of the plurality of sections.

15. The method of any of claims 13 or 14, wherein selectively modifying the at least one section further comprises the steps of:
(i) determining that a first section of the plurality of sections causes a processor stall;
(ii) determining a location within the first section having greatest number of unpruned weights in N locations before and N-1 locations after the weight location;
(iii) determining whether a pruned weight is located in a corresponding location in at least one other section configured to be processed concurrently with the first section; and
(iv) replacing the pruned weight with the non-pruned weight having the pruned weight value.
